# EUROPÄISCHE PATENTSCHRIFT

(11) **EP 4 624 873 B1**
(45) Veröffentlichungstag und Bekanntmachung des Hinweises auf die Patenterteilung: **27.05.2026**
(21) Anmeldenummer: 25163815.1
(22) Anmeldetag: 14.03.2025
(51) Int. Cl.: G01F 1/60, B67C 3/28

(54) **VERFAHREN ZUM BETREIBEN EINER ABFÜLLVORRICHTUNG MIT EINEM ABFÜLLVENTIL**
METHOD FOR OPERATING A FILLING DEVICE HAVING A FILLING VALVE
PROCÉDÉ DE FONCTIONNEMENT D'UN DISPOSITIF DE REMPLISSAGE DOTÉ D'UNE SOUPAPE DE REMPLISSAGE

(30) Priorität: 25.03.2024 DE 102024108418
(43) Veröffentlichungstag der Anmeldung: 01.10.2025
(73) Patentinhaber: Krohne Messtechnik GmbH, 47058 Duisburg (DE)
(72) Erfinder: Kuschnerus, Dirk, 47802 Krefeld (DE); Lüke, Christopher, 45892 Gelsenkirchen (DE); Walbrecker, Sven, 27639 Wurster Nordseeküste (DE)
(74) Vertreter: Gesthuysen Patentanwälte

(56) Entgegenhaltungen:
- EP-A1- 4 009 009
- DE-A1- 19 621 132

## Beschreibung

Die Erfindung betrifft ein Verfahren zum Betreiben einer Abfüllvorrichtung mit einem Abfüllventil zur Steuerung eines Mediumstroms, mit einem magnetisch-induktiven Durchflusssensor zur messtechnischen Erfassung des von dem Abfüllventil freigegebenen Mediumstroms und mit einer Steuer- und Auswerteeinheit zur Ansteuerung des Abfüllventils, wobei der magnetisch-induktive Durchflusssensor ein Messrohr zum Führen des Mediumstroms, eine Magnetfelderzeugungsvorrichtung zum Erzeugen eines das Messrohr senkrecht zur Strömungsrichtung des Mediumstroms durchsetzenden Magnetfeldes aufweist, wobei die Steuer- und Auswerteeinheit die Magnetfelderzeugungsvorrichtung so ansteuert, dass in einem Standardbetrieb das Magnetfeld mit einer Standard-Magnetfeldfrequenz als Arbeit-Magnetfeldfrequenz seine Polarität ändert, wobei die Steuer- und Auswerteeinheit im Intervall einer konstanten Magnetfeldpolarität und eines stabilen Magnetfeldes auf Grundlage einer Standard-Kalibrierung als Arbeit-Kalibrierung mindestens einen Durchflussmesswert ermittelt, und wobei die Steuer- und Auswerteeinheit das Abfüllventil zur Durchführung eines Abfüllvorgangs mit wenigstens einer Plateauphase des Durchflusses und einem zugehörigen Plateau-Durchflussmesswert mit einer definierten Soll-Abfüllmenge gemäß einer Füllkurve ansteuert, wobei die Füllkurve den Öffnungsgrad des Abfüllventils angibt. Darüber hinaus betrifft die Erfindung auch eine entsprechende Abfüllvorrichtung.

Europäische Patentanmeldung EP 4 009 009 A1 offenbart ein Verfahren zum Betreiben einer Abfüllvorrichtung und eine Abfüllvorrichtung nach dem Stand der Technik.

Abfüllvorrichtungen der vorgenannten Art sind in der Prozesstechnik weit verbreitet, beispielsweise in der chemischen Industrie, vor allem aber auch in der Lebensmittel- und Getränkeindustrie. Bei Abfüllvorrichtungen können prinzipiell Durchflusssensoren verwendet werden, die auf beliebigen Messprinzipien für den Durchfluss beruhen, vorliegend geht es jedoch um den Einsatz von magnetisch-induktiven Durchflusssensoren. Magnetisch-induktive Durchflusssensoren haben den Vorteil, dass keine mechanisch bewegten Teile zur Durchführung einer Messung benötigt werden, anders als beispielsweise bei Vortex-Durchflussmessgeräten oder Coriolis-Massedurchflussmessgeräten. Industriell genutzte prozesstechnische Abfüllanlagen weisen oft eine Vielzahl der zuvor beschriebenen Abfüllvorrichtungen auf, die auch als Abfüllstationen innerhalb einer Abfüllanlage bezeichnet werden könnten. Das Messprinzip der magnetisch-induktiven Durchflussmessung beruht auf der Kraftwirkung auf bewegte Ladungsträger in einem Magnetfeld (Lorentzkraft) und die dadurch bewirkte Ladungstrennung im Mediumstrom im Bereich des Magnetfeldes. Für die Funktionsfähigkeit des Messprinzips ist es also erforderlich, dass das Medium eine elektrische Mindestleitfähigkeit aufweist. Die getrennten Ladungsträger erzeugen ein elektrisches Feld in dem Medium, dessen Stärke sich proportional zu der Geschwindigkeit des Mediums verhält. Mittels zweier Messelektroden am Umfang des Messrohrs kann eine dem Durchfluss des Mediums proportionale Messspannung abgegriffen werden, die dann zu einem Durchflussmesswert weiterverarbeitet wird.

Es ist üblich, die Polarität des von der Magnetfelderzeugungsvorrichtung erzeugten Magnetfeldes mit einer Magnetfeldfrequenz zu ändern, sodass sich auch die Polarität der von den Messelektroden aufgenommenen Messspannung ändert. Gründe für den regelmäßigen Wechsel der Polarität des Magnetfeldes sind beispielsweise die Möglichkeit der Herausrechnung von sich nicht mit der Polarität des Magnetfeldes ändernden parasitären Elektrodenspannungen und auch die Vermeidung von elektrochemischen Prozessen an den Elektroden die im Zusammenhang stehen mit Ladungsträgern gleichbleibender Polarität. Die Magnetfeldfrequenz liegt typischerweise im Bereich von einigen zehn bis hundert Hz.

Das umschalten des Magnetfeldes kann nicht schlagartig erfolgen, da die Änderung der Bestromung der Magnetfelderzeugungsvorrichtung über den Ab- und Aufbau von Spannungs-Zeit-Flächen eine gewisse Zeit in Anspruch nimmt. Die Spannung der Messelektroden wird erst dann zur Ermittlung von Durchflussmesswerten herangezogen, wenn das Magnetfeld stabil ist, also eine gleichbleibende Stärke aufweist. In dem Intervall einer konstanten Magnetfeldpolarität und eines stabilen Magnetfeldes - also eines Magnetfeldes gleichbleibender Stärke - wird die Messspannung hochfrequent abgetastet, üblicherweise durch einen A/D-Wandler mit einer Samplingrate die meist um Größenordnungen höher ist als die Magnetfeldfrequenz, und aus der Vielzahl so erhaltener Rohmesswerte wird dann ein Durchflussmesswert ermittelt. Die Magnetfeldfrequenz gibt damit auch die Messrate an, mit der der magnetisch-induktive Durchflusssensor Durchflussmesswerte ermittelt und zur Verfügung stellt.

Für Durchflusssensoren werden Spezifikationswerte, wie beispielsweise die Genauigkeit (Absolutgenauigkeit und Wiederholbarkeit) und der Messbereich (minimale und maximale erfassbare Durchflüsse), für einen bestimmten Betriebsbereich, wie beispielsweise die Temperatur (minimale, maximale Umgebungs- und/oder Mediumtemperatur) angegeben. Innerhalb des als zulässig angegebenen Betriebsbereiches ist die Einhaltung der Spezifikation gewährleistet.

Das Arbeiten des Durchflusssensors im zulässigen Betriebsbereich ist eingangs als Standardbetrieb bezeichnet worden, bei der der Durchflusssensor mit einer Standard-Magnetfeldfrequenz als Arbeit-Magnetfeldfrequenz arbeitet. Bei dieser Standard-Magnetfeldfrequenz wird der Durchflusssensor - meist werkseitig - kalibriert, es wird also eine Kalibrierkurve ermittelt, die den Zusammenhang zwischen der Messspannung an den Elektroden und der mittleren Durchflussgeschwindigkeit des Mediumstroms durch das Messrohr beschreibt. Häufig handelt es sich bei der Kalibrierkurve um eine Gerade mit einer Steigung (Geberkonstante) und einem Nullpunkt-Offset (Elektrodenspannung bei Null-Durchfluss), es können aber auch mehr als zwei Punkte zur Beschreibung der Kalibrierkurve herangezogen werden. Im Standardbetrieb wird mit der Standard-Kalibrierung gearbeitet, die Standard-Kalibrierung ist also die Arbeit-Kalibrierung im Standardbetrieb.

Bei Betrieb des Durchflusssensors in diesem Standardbetrieb ist beispielsweise gewährleistet, dass im als zulässig angegebenen Temperaturbereich Messwerte mit einer bestimmten Messrate vorliegen, was auf Grundlage der zuvor angegebenen Erläuterung des Zusammenhangs zwischen Magnetfeldfrequenz und Messrate bedeutet, dass auch das Magnetfeld im gesamten Temperaturbereich mit der erforderlichen Magnetfeldfrequenz erzeugt werden kann, also so, dass bei einer konstanten Magnetfeldpolarität über eine ausreichende Zeit ein stabiles Magnetfeld erzeugt wird, sodass in hinreichendem Umfang Rohmessdaten aufgenommen werden können, aus denen dann der Durchflussmesswert ermittelt wird.

Die eingangs beschriebene Abfüllvorrichtung umfasst als zentrale Komponenten das Abfüllventil, den Durchflusssensor und die Steuer- und Auswerteeinheit. Das Abfüllventil kann technisch in verschiedener Weise realisiert sein, es kann ein Ventil mit einem einzigen ansteuerbaren Stellelement sein, es kann aber auch mehrere steuerbare Komponenten umfassen, beispielsweise eine Kombination aus Schaltventil und Regelventil. Die Steuer- und Auswerteeinheit steuert das Abfüllventil an, wobei im hier betrachteten Fall eine Füllkurve abgefahren wird, die den Öffnungsgrad des Abfüllventils in Abhängigkeit von der erfassten Abfüllmenge beschreibt. Dadurch lässt sich der Abfüllvorgang sehr fein einstellen, es kann beispielsweise eine langsame Öffnung des Abfüllventils zu Beginn des Abfüllvorgangs gewählt werden, um ein Aufschäumen oder verwirbeln des Mediums zu verhindern, in der Mitte des Abfüllvorgangs kann über eine gewisse Füllstrecke eine große Ventilöffnung konstant eingestellt werden (Plateauphase), bis zum Ende der Abfüllung, bei dem die Ventilöffnung schrittweise oder auch kontinuierlich reduziert wird. Ein Abfüllvorgang kann auch mehrere Plateauphasen, also Intervalle konstanten Durchflusses (Plateau-Durchfluss) aufweisen, es wird davon ausgegangen, dass der Abfüllvorgang jedenfalls mindestens eine Plateauphase aufweist.

Abgesehen davon, dass eine möglichst genaue Dosierung eines Mediums im Rahmen eines Abfüllvorgangs immer wünschenswert ist, kommt der Genauigkeit eines Abfüllvorgangs eine erhöhte Bedeutung zu bei der Abfüllung in Behältnisse, die zur Weitergabe an Endverbraucher gedacht sind (Flaschen, Kanister, Dosen). Hier muss eine Mindestmenge, meist die auf dem Behältnis angegebene Menge, garantiert enthalten sein, sodass Toleranzen in der Abfüllung stets zulasten des Herstellers gehen, es wird also stets mit einer Überfüllung gearbeitet.

Aufgabe der vorliegenden Erfindung ist es, das Verfahren zum Betreiben der Abfüllvorrichtung und eine entsprechende Abfüllvorrichtung so auszugestalten und weiterzubilden, dass der Abfüllvorgang mit einer erhöhten Genauigkeit durchgeführt werden kann.

Die zuvor hergeleitete und aufgezeigte Aufgabe wird bei dem Verfahren zum Betreiben einer Abfüllvorrichtung dadurch gelöst, dass in einer Testphase die Steuer- und Auswerteeinheit die Magnetfeldeinrichtung mit einer Test-Magnetfeldfrequenz betreibt, die größer ist als die eingestellte Arbeit-Magnetfeldfrequenz, wobei überprüft wird, ob auch bei der Test-Magnetfeldfrequenz in einem Intervall einer konstanten Magnetfeldpolarität ein stabiles Magnetfeld erzeugt wird, und dass bei Erzeugen eines stabilen Magnetfeldes die Test-Magnetfeldfrequenz als neue Arbeit-Magnetfeldfrequenz eingestellt und verwendet wird. Kann mit der Test-Magnetfeldfrequenz kein stabiles Magnetfeld erzeugt werden, kann auf verschiedene Weise reagiert werden, zum Beispiel kann die Arbeit-Magnetfeldfrequenz, von der ausgegangen worden ist, einfach als Arbeit-Magnetfeldfrequenz beibehalten werden.

Der Erfindung liegt die Erkenntnis zugrunde, dass der Standardbetrieb so ausgelegt ist, dass der Durchflusssensor spezifikationsgemäß arbeiten kann, also auch unter ungünstigen Bedingungen - beispielsweise bei hohen Temperaturen, bei denen der ohmsche Widerstand der Magnetfelderzeugungsvorrichtung angestiegen ist - ganz sicher noch ein stabiles Magnetfeld bei der Standard-Magnetfeldfrequenz und damit eine entsprechend hohe Messrate für die Ermittlung von Durchflussmesswerten erzielen kann. Die Auslegung eines Durchflusssensors erfolgt üblicherweise ferner so, dass auch bei geringfügiger Abweichung von dem zulässigen Betriebsbereich noch ein spezifikationsgemäßer Betrieb des Durchflusssensors und damit der Abfüllvorrichtung möglich ist. Umgekehrt bedeutet dies, dass bei günstigeren Betriebsbedingungen innerhalb des Betriebsbereiches mit dem Durchflusssensor hinsichtlich mancher Parameter eine bessere Leistung erzielt werden kann, als es seine Spezifikation erwarten lässt.

Die Erfindung zielt ab auf eine Erhöhung der Messrate, mit der Durchflussmesswerte ermittelt werden, und damit auf eine Erhöhung der Arbeit-Magnetfeldfrequenz des Magnetfeldes über die Standard-Magnetfeldfrequenz hinaus. Die Erhöhung der Arbeit-Magnetfeldfrequenz und damit der Messrate der Durchflussmesswerte wirkt sich unmittelbar aus auf eine Verbesserung der absoluten Messgenauigkeit wie auch auf die Wiederholbarkeit bei Abfüllungen, da der kontinuierliche Verlauf des Durchflusses mit einer höheren Frequenz abgetastet wird und so zeitlich feiner aufgelöst wird.

Bei einer vorteilhaften Ausgestaltung des Verfahrens ist vorgesehen, dass die Überprüfung, ob in einem Intervall einer konstanten Magnetfeldpolarität ein stabiles Magnetfeld erzeugt wird, dadurch erfolgt, dass ein Magnetfeldsensor ausgewertet wird und die Stationarität des Magnetfeldes beurteilt wird. Zusätzlich oder alternativ wird die Stationarität eines in die Magnetfelderzeugungsvorrichtung eingeprägten Stroms und/oder einer an die Magnetfelderzeugungsvorrichtung angelegten Spannung beurteilt. Vorzugsweise wird die Stationarität der Größen durch Zeitreihenanalyse der erfassten Magnetfeldstärke und/oder des erfassten eingeprägten Stromes und/oder der erfassten angelegten Spannung beurteilt. Es können zur Beurteilung der Stationarität bekannte statistische Abweichungsmaße verwendet werden, wie beispielsweise die Standardabweichung.

Bei einem bevorzugten Ausführungsbeispiel des Verfahrens wird die Testphase mehrfach wiederholt. Sofern bei den mehreren Wiederholungen immer ein stabiles Magnetfeld erzeugt werden kann, wird die Arbeit-Magnetfeldfrequenz - und damit die Messrate, mit der Durchflussmesswerte erzeugt werden - schrittweise erhöht. Die Wiederholungen werden vorzugsweise so oft fortgesetzt, bis die größte Test-Magnetfeldfrequenz ermittelt worden ist, bei der in einem Intervall einer konstanten Magnetfeldpolarität ein stabiles Magnetfeld erzeugt wird. Natürlich wird auch hier die Test-Magnetfeldfrequenz als Arbeit-Magnetfeldfrequenz eingestellt, wenn sich das Magnetfeld als stabil erwiesen hat.

Bei einer Weiterentwicklung des zuvor beschriebenen Ausführungsbeispiels wird die Test-Magnetfeldfrequenz bei den Wiederholungen der Testphase in gleichbleibenden Frequenzschritten erhöht (zum Beispiel 60 Hz, 65 Hz, 70 Hz usw.), alternativ wird die Test-Magnetfeldfrequenz zunächst in großen, dann in kleiner werdenden Frequenzschritten erhöht (zum Beispiel 60 Hz, 75 Hz, 85 Hz, 90 Hz, 92 Hz), bei einer weiteren Alternative wird die Test-Magnetfeldfrequenz nach dem Prinzip der Intervallschachtelung verändert. Im Fall der Intervallschachtelung kann sich die Intervallschrittweite zum Beispiel in jeder Wiederholung der Testphase halbieren, wobei die Sprungrichtung vom Ergebnis der Stabilitätsprüfung des Magnetfeldes abhängt (zum Beispiel umfasst das vollständige Intervall 50 Hz bis 100 Hz: 50 Hz (stabil), 100 Hz (instabil), 75 Hz (stabil), 87,5 Hz (stabil), 93,75 Hz (stabil), Abbruch bei Unterschreitung von Mindestschrittweite).

Wenn berücksichtigt wird, dass die Magnetfeldfrequenzen, wie in den angegebenen Beispielen, oft im Bereich von einigen 10 Hz liegen, dann wird deutlich, dass das Auffinden auch der höchsten möglichen Arbeit-Magnetfeldfrequenz nur Sekundenbruchteile in Anspruch nimmt.

Eine Weiterentwicklung des Verfahrens zeichnet sich dadurch aus, dass die Überprüfung auf ein stabiles Magnetfeld durchgeführt wird, ohne dass die Magnetfeldfrequenz - wie im Testbetrieb - verändert wird. So kann sichergestellt werden, dass die abweichend von der Standard-Magnetfeldfrequenz eingestellte Arbeit-Magnetfeldfrequenz noch einen validen Betriebsmodus darstellt. Insbesondere kann diese Überprüfung fortwährend durchgeführt werden, also bei jeder Umschaltung der Polarität des Magnetfeldes.

Eine Weiterentwicklung des Verfahrens ist dadurch gekennzeichnet, dass die Arbeit-Magnetfeldfrequenz auf die Standard-Magnetfeldfrequenz zurückgeschaltet wird und die Testphase ausgehend vom Standardbetrieb neu durchlaufen wird. Das Zurückschalten auf den Standardbetrieb kann in regelmäßigen Zeitabständen oder nach einer gewissen Zahl von Abfüllintervallen erfolgen oder auch nachdem festgestellt worden ist, dass bei der eingestellten Arbeit-Magnetfeldfrequenz kein stabiles Magnetfeld mehr erzeugt werden kann.

Bei einer besonders vorteilhaften Ausgestaltung des Verfahrens wird der Durchflusssensor mit der von der Standard-Magnetfeldfrequenz abweichenden Arbeit-Magnetfeldfrequenz betrieben und der Durchflusssensor wird neu kalibriert durch Ermittlung einer Test-Kalibrierkurve zwischen wenigstens zwei Punkten bekannten Durchflusses während des Abfüllvorgangs und zugehörigen erfassten Spannungswerten an zwei Messelektroden des Durchflusssensors, wobei die Test-Kalibrierkurve nachfolgend als Arbeit-Kalibrierung verwendet wird.

Bei einer Weiterentwicklung des vorgenannten Verfahrens wird als ein Punkt bekannten Durchflusses der Plateau-Durchfluss während der Plateauphase des Durchflusses und der zugehörige Spannungswert an den Messelektroden des Durchflusssensors verwendet. Alternativ oder zusätzlich wird als ein anderer Punkt ein Null-Durchfluss bei geschlossenem Abfüllventil während des Abfüllvorgangs und der zugehörige Spannungswert an den Messelektroden des Durchflusssensors verwendet. Aus den so ermittelten Werten lässt sich eine Kalibriergerade ermitteln mit der Steigung als sogenannte Geberkonstante und dem Nullpunkt-Offset bei Null-Durchfluss.

Bei einer Weiterbildung des zuvor beschriebenen Verfahrens wird der Nulldurchfluss validiert durch Überprüfung des Öffnungsgrades des Abfüllventils auf vollständige Geschlossenheit und/oder durch Überprüfung des Null-Durchflusses durch den Durchflussmesswert des Durchflusssensors bei übergangsweisem Zurückschalten auf den Standardbetrieb mit der Standard-Magnetfeldfrequenz auf Grundlage der Standard-Kalibrierung und nachfolgendem Wechsel auf die von der Standard-Magnetfeldfrequenz abweichende stabile Test-Magnetfeldfrequenz, für die die Kalibrierkurve bestimmt wird.

Hinsichtlich der Verfahrenserweiterungen mit der Ermittlung einer Kalibrierkurve ist bei einer Weiterentwicklung vorgesehen, dass der Durchflusssensor auf Standard-Betrieb umgeschaltet wird, indem die Standard-Magnetfeldfrequenz als Arbeit-Magnetfeldfrequenz und die Standard-Kalibrierung als Arbeit-Kalibrierung eingestellt wird, ferner wird bei anschließender Durchführung eines Abfüllvorgangs ein aktueller Plateau-Durchflussmesswert in der Plateauphase des Durchflusses ermittelt, wobei bei einer Abweichung des aktuellen Plateau-Durchflussmesswertes von dem zuvor ermittelten (oder gegebenen) Plateau-Durchflussmesswert mit Standard-Kalibrierung oder von dem zuvor ermittelten Durchflussmesswert in der Plateauphase mit erhöhter Test-Magnetfeldfrequenz mit der Test-Kalibrierkurve als Arbeit-Kalibrierung eine neue Test-Kalibrierkurve ermittelt und als Arbeit-Kalibrierung eingestellt wird. Durch diese Vorgehensweise wird vermieden, dass bei Veränderung im Abfüllverhalten (zum Beispiel durch veränderten Prozessdruck) von einem unzutreffenden Wert für den Plateau-Durchfluss ausgegangen wird, was auch zu einer fehlerhaften Kalibrierung führen würde.

Bei einer weiteren vorteilhaften Ausgestaltung des Verfahrens wird wenigstens eine Temperatur des Durchflusssensors ermittelt, insbesondere wird eine Temperatur der Magnetfelderzeugungsvorrichtung und/oder eine Mediumtemperatur des den Durchflusssensor durchströmenden Mediumstroms und/oder eine Umgebungstemperatur des Durchflusssensors ermittelt. Diese Temperaturen haben sämtlich Einfluss auf den Durchflusssensor, wenn auch die Unmittelbarkeit des Einflusses unterschiedlich ist. Die Verwendung der vorgenannten Temperaturen ist deshalb sinnvoll, weil der ohmsche Widerstand der Magnetfelderzeugungsvorrichtung deutlich temperaturabhängig ist und der ohmsche Widerstand mit entscheidend dafür ist, mit welchen Spannungen welche Ströme in die Magnetfelderzeugungsvorrichtung einprägbar sind, der ohmsche Widerstand ist also bestimmend für das Zeitverhalten des Umschaltens der interessierenden Magnetfelder. In Abhängigkeit von der wenigstens einen Temperatur des Durchflusssensors wird in der Testphase eine Start-Test-Magnetfeldfrequenz als Test-Magnetfeldfrequenz ermittelt und verwendet, die nahe an der bei der ermittelten Temperatur des Durchflusssensors erreichbaren maximalen stabilen Test-Magnetfeldfrequenz liegt. Bei welcher Temperatur welche Start-Test-Magnetfeldfrequenz sinnvoll gewählt werden kann, welche Abhängigkeit zwischen der Start-Test-Magnetfeldfrequenz und der wenigstens einen ermittelten Temperatur des Durchflusssensors besteht, kann beispielsweise empirisch ermittelt werden, insbesondere für einen bestimmten Typ von Durchflusssensor oder Abfüllvorrichtung.

Wie eingangs erwähnt worden ist, weisen Abfüllanlagen oft eine Vielzahl der zuvor beschriebenen Abfüllvorrichtungen auf. In diesem Zusammenhang weist eine weitere vorteilhafte Ausgestaltung des Verfahrens die Eigenschaft auf, dass die für einen bestimmten Durchflusssensor in einer bestimmten Abfüllvorrichtung ermittelte Arbeit-Magnetfeldfrequenz und/oder Test-Kalibrierkurve als Arbeit-Kalibrierung auf andere Durchflusssensoren in anderen Abfüllvorrichtungen übertragen werden, insbesondere auf andere Durchflusssensoren in anderen Abfüllvorrichtungen, die in einer Abfüllanlage zusammen mit der bestimmten Abfüllvorrichtung betrieben werden.

Die beschriebene Aufgabe wird auch mit einer entsprechenden und zuvor beschriebenen Abfüllvorrichtung mit einem Abfüllventil zur Steuerung eines Mediumstroms, mit einem magnetisch-induktiven Durchflusssensor zur messtechnischen Erfassung des von dem Abfüllventil freigegebenen Mediumstroms und mit einer Steuer- und Auswerteeinheit zur Ansteuerung des Abfüllventils, wobei die Steuer- und Auswerteeinheit das Abfüllventil zur Durchführung eines Abfüllvorgangs mit einer definierten Soll-Abfüllmenge gemäß einer Füllkurve ansteuert, wobei die Füllkurve den Öffnungsgrad des Abfüllventils angibt, wobei der magnetisch-induktive Durchflusssensor ein Messrohr zum Führen des Mediumstroms, eine Magnetfelderzeugungsvorrichtung zum Erzeugen eines das Messrohr senkrecht zur Strömungsrichtung des Mediumstroms durchsetzenden Magnetfeldes aufweist, wobei die Steuer- und Auswerteeinheit die Magnetfelderzeugungsvorrichtung so ansteuert, dass in einem Standardbetrieb das Magnetfeld mit einer Standard-Magnetfeldfrequenz als Arbeit-Magnetfeldfrequenz seine Polarität ändert, wobei die Steuer- und Auswerteeinheit im Intervall einer konstanten Magnetfeldpolarität und eines stabilen Magnetfeldes auf Grundlage einer Standard-Kalibrierung als Arbeit-Kalibrierung mindestens einen Durchflussmesswert ermittelt, dadurch gelöst, dass die Steuer- und Auswerteeinheit so ausgestaltet und eingerichtet ist, dass sie beim Betrieb der Abfüllvorrichtung das zuvor ausführlich beschriebene Verfahren einschließlich seiner Weiterentwicklungen ausführt.

Im Einzelnen gibt es nun eine Vielzahl von Möglichkeiten, das erfindungsgemäße Verfahren zum Betreiben einer Abfüllvorrichtung und und die erfindungsgemäße Abfüllvorrichtung auszugestalten und weiterzubilden. Dazu wird verwiesen einerseits auf die den unabhängigen Patentansprüchen nachgeordneten Patentansprüche, andererseits auf die folgende Beschreibung von Ausführungsbeispielen in Verbindung mit der Zeichnung. In der Zeichnung zeigen
- Fig. 1: schematisch ein Verfahren zum Betreiben einer Abfüllvorrichtung zusammen mit einer solchen Abfüllvorrichtung, wie sie aus dem Stand der Technik bekannt sind,
- Fig. 2: schematisch das Umschalten der Polarität des Magnetfeldes des Durchflusssensors,
- Fig. 3: schematisch die Änderung der Magnetfeldfrequenz und Test auf ein stabiles Magnetfeld in einer Testphase,
- Fig. 4: schematisch die mehrfache Wiederholung der Testphase zwecks systematischer Erhöhung der Magnetfeldfrequenz und
- Fig. 5: schematisch die Neukalibrierung des Durchflusssensors.

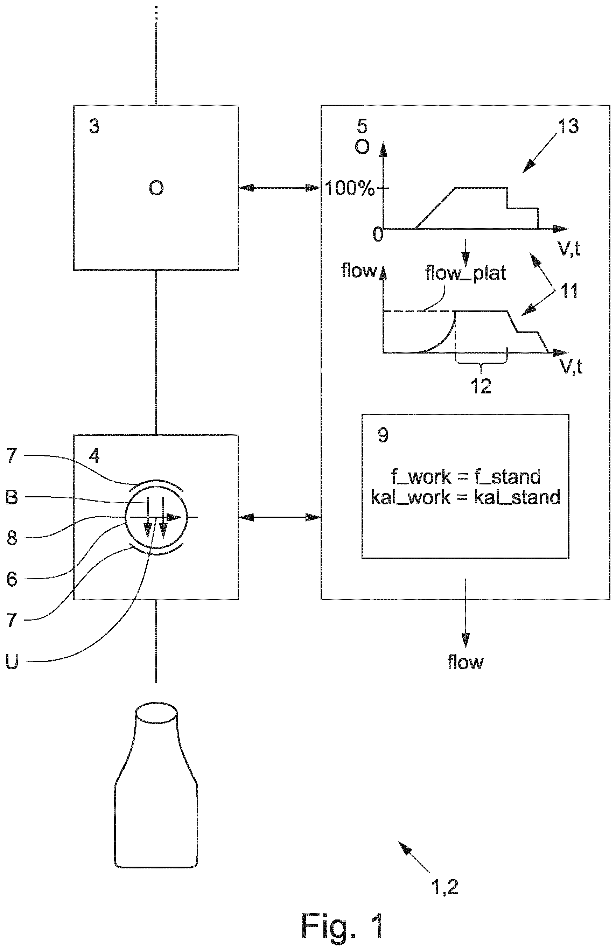

In den Fig. 1 bis 5 sind schematisch in verschiedenen Ausprägungen und in verschiedenen Detaillierungsgraden das Verfahren 1 zum Betreiben einer Abfüllvorrichtung 2 mit einem Abfüllventil 3 zur Steuerung eines Mediumstroms, mit einem magnetisch-induktiven Durchflusssensor 4 zur messtechnischen Erfassung des von dem Abfüllventil 3 freigegebenen Mediumstroms und mit einer Steuer- und Auswerteeinheit 5 zur Ansteuerung des Abfüllventils 3, sowie entsprechende Abfüllvorrichtungen 2 gezeigt.

Fig. 1 zeigt das Verfahren 1 zum Betreiben einer Abfüllvorrichtung 2 und eine solche Abfüllvorrichtung 2, wie sie aus dem Stand der Technik bekannt sind. Der magnetisch-induktive Durchflusssensor 4 weist ein Messrohr 6 zum Führen des Mediumstroms, eine Magnetfelderzeugungsvorrichtung 7 zum Erzeugen eines das Messrohr 6 senkrecht zur Strömungsrichtung des Mediumstroms durchsetzenden Magnetfeldes B auf. Die Steuer- und Auswerteeinheit 5 steuert die Magnetfelderzeugungsvorrichtung 7 so an, dass in einem Standardbetrieb 9 das Magnetfeld B mit einer Standard-Magnetfeldfrequenz f_stand als Arbeit-Magnetfeldfrequenz f_work seine Polarität ändert, wobei die Steuer- und Auswerteeinheit 5 im Intervall 10 einer konstanten Magnetfeldpolarität und eines stabilen Magnetfeldes B auf Grundlage einer Standard-Kalibrierung kal_stand als Arbeit-Kalibrierung kal_work mindestens einen Durchflussmesswert flow ermittelt.

Die Steuer- und Auswerteeinheit 5 steuert das Abfüllventil 3 zur Durchführung eines Abfüllvorgangs 11 mit wenigstens einer Plateauphase 12 des Durchflusses und einem zugehörigen Plateau-Durchflussmesswert flow_plat mit einer definierten Soll-Abfüllmenge gemäß einer Füllkurve 13 an. Die Füllkurve 13 gibt den Öffnungsgrad O des Abfüllventils 3 an. Die Füllkurve 13 ist in Fig. 1 aufgetragen über die Abfüllmenge V. Die Abfüllmenge V ergibt sich durch Integration der Durchflussmesswerte flow über die Zeit. Wenn die Prozessverhältnisse gleichbleibend sind, dann könnte die Füllkurve 13 auch über die Zeit aufgetragen werden, was in Fig. 1 angedeutet ist.

Der Standardbetrieb 9 zeichnet sich durch die Verwendung von Standard-Parametern (f_stand, kal_stand) aus, mit denen der Durchflusssensor 4 und damit die Abfüllvorrichtung 2 werkseitig kalibriert worden sind. Der Durchflusssensor 4 ist so ausgelegt, dass er über den angegebenen Betriebsbereich (beispielsweise einen Temperaturbereich), Durchflussmesswerte flow im Rahmen der für ihn geltenden Spezifikation bestimmen kann, also beispielsweise mit einer bestimmten Messrate und mit einer bestimmten Genauigkeit.

Die Steuer- und Auswerteeinheit 5 dient zum einen der Ansteuerung des Abfüllventils 3, sie dient aber auch zur Ansteuerung des magnetisch-induktiven Durchflusssensors 4 und der Auswertung der von dem Durchflusssensor 4 erhaltenen Rohmessdaten und der Ermittlung von Durchflussmesswerten flow. In Fig. 1 ist die Steuer- und Auswerteeinheit 5 als ein Einheit dargestellt, darauf kommt es jedoch nicht an. Üblicherweise sind derartige Steuer- und Auswerteeinheiten 5 hardwaremäßig realisiert auf Basis von Mikrocontrollern und/oder digitalen Signalprozessoren. Ob die Steuer- und Auswerteeinheit 5 als ein gerätetechnisches Modul oder mittels mehrerer gerätetechnischer Modulen realisiert ist, die miteinander kommunizieren, ist für die Beschreibung des hier interessierenden Verfahrens 1 und der hier interessierenden Abfüllvorrichtung 2 nicht von Belang.

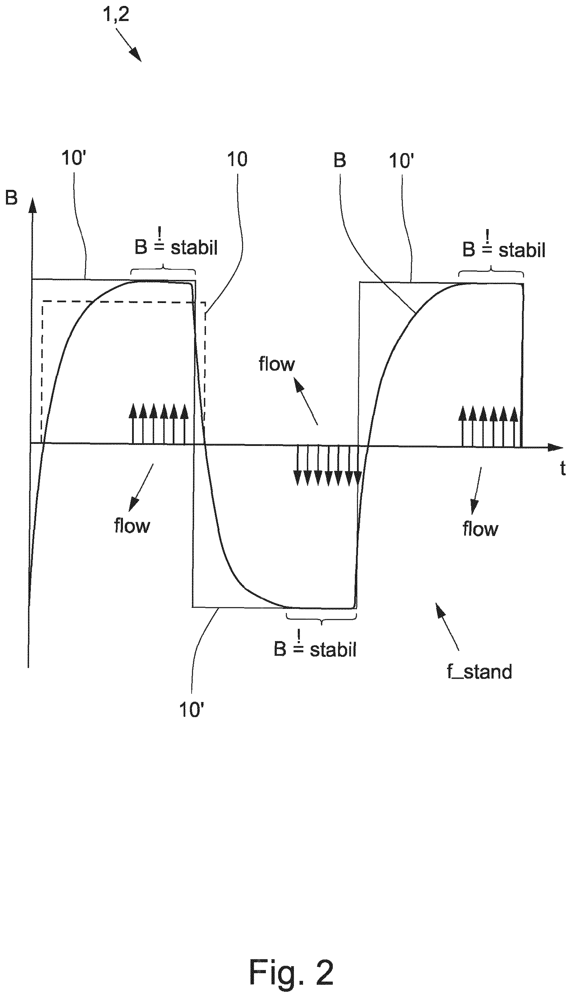

Fig. 2 zeigt den zeitlichen Verlauf des von der Magnetfelderzeugungsvorrichtung 7 erzeugten Magnetfeldes B. Das Magnetfeld B wird im Standardbetrieb mit der Standard-Magnetfeldfrequenz f_stand hinsichtlich seiner Polarität umgeschaltet. Dargestellt sind drei Umschaltintervalle 10' der Magnetfeldpolarität, die nahezu deckungsgleich sind mit den Intervallen 10 gleichbleibender Magnetfeldpolarität. Wenn mit Beginn des Umschaltintervalls 10' die Polarität der Spannung an der Magnetfelderzeugungsvorrichtung 7 geändert wird, dauert es eine gewisse Zeit, bis sich das Magnetfeld B zunächst in der einen Richtung abbaut und sich in der anderen Richtung aufbaut. Die Zeit, bis sich das Magnetfeld B von der einen Polarität vollständig abgebaut hat, ist der Zeitversatz zwischen dem Intervall konstanter Magnetfeldpolarität 10 und dem Umschaltintervall 10'. Wichtig ist jedenfalls, dass für die Berechnung von Durchflussmesswerten flow nur Spannungen an den Messelektroden 8 verwendet werden können, wenn das Magnetfeld B stabil ist, also eine konstante und vorbestimmte Höhe erreicht hat.

In Fig. 2 sind die Intervalle gekennzeichnet, in denen das Magnetfeld B diese Stabilitätsanforderungen erfüllt (B!=stabil). Die in diesem zeitlichen Bereichen durch die Pfeile angedeuteten abgetasteten Spannungen an den Messelektroden 8 können herangezogen werden, um in jedem Intervall jeweils einen Durchflussmesswert flow zu berechnen. Die Messrate, mit der der Durchflusssensor 4 Durchflussmesswerte flow erzeugt, hängt also unmittelbar von der Magnetfeldfrequenz ab, mit der das Magnetfeld B seine Polarität ändert.

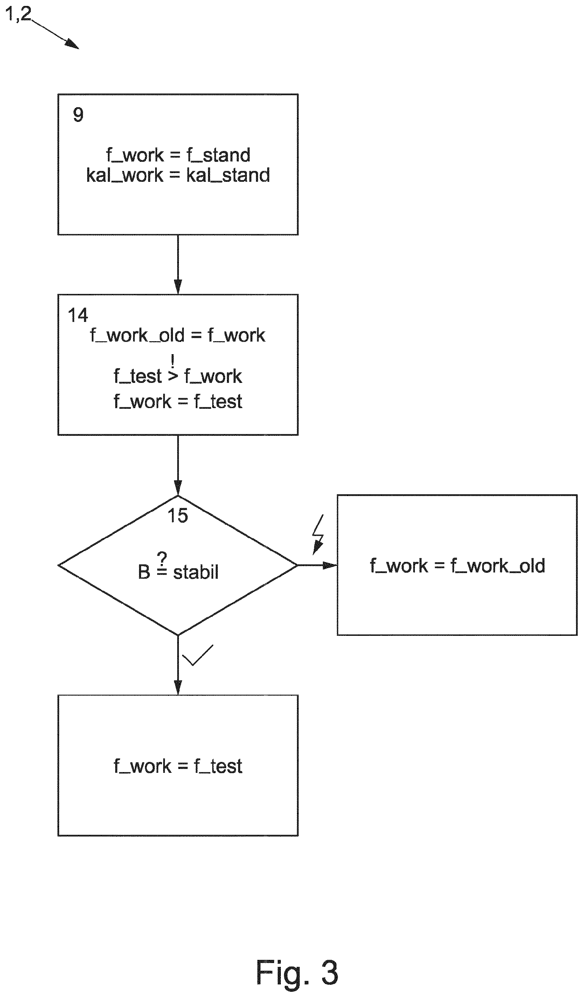

Fig. 3 zeigt ein Verfahren 1, das darauf abzielt, die Magnetfeldfrequenz gegenüber der ursprünglichen Kalibrierung zu erhöhen, um die Messrate für die Durchflussmessung des Durchflusssensors 4 zu erhöhen und so die Messgenauigkeit und die Wiederholgenauigkeit des Durchflusssensors 4 zu verbessern. Ausgangspunkt ist der Standardbetrieb 9. In einer darauffolgenden Testphase 14 betreibt die Steuer- und Auswerteeinheit 5 die Magnetfelderzeugungsvorrichtung 7 mit einer Test-Magnetfeldfrequenz f_test, die größer ist als die eingestellte Arbeit-Magnetfeldfrequenz f_work. Dann wird überprüft 15 (B?=stabil), ob auch bei der Test-Magnetfeldfrequenz f_test in einem Intervall 10 einer konstanten Magnetfeldpolarität ein stabiles Magnetfeld B erzeugt wird. Bei Erzeugen eines stabilen Magnetfeldes B wird die Test-Magnetfeldfrequenz f_test als neue Arbeit-Magnetfeldfrequenz f_work eingestellt und verwendet. Lässt sich bei der höheren Magnetfeldfrequenz kein stabiles Magnetfeld erzielen, wird in dem dargestellten Ausführungsbeispiel als Arbeit-Magnetfeldfrequenz f_work die alte Arbeit-Magnetfeldfrequenz f_work_alt, in diesem Fall also die Standard-Magnetfeldfrequenz, als Arbeit-Magnetfeldfrequenz zurückgestellt.

Die Überprüfung 15, ob in einem Intervall 10 einer konstanten Magnetfeldpolarität ein stabiles Magnetfeld B erzeugt wird, erfolgt dadurch, dass die Stationarität eines in die Magnetfelderzeugungsvorrichtung 7 eingeprägten Stroms und einer an die Magnetfelderzeugungsvorrichtung 7 angelegten Spannung beurteilt wird, vorliegend durch Zeitreihenanalyse des erfassten eingeprägten Stromes und der erfassten angelegten Spannung.

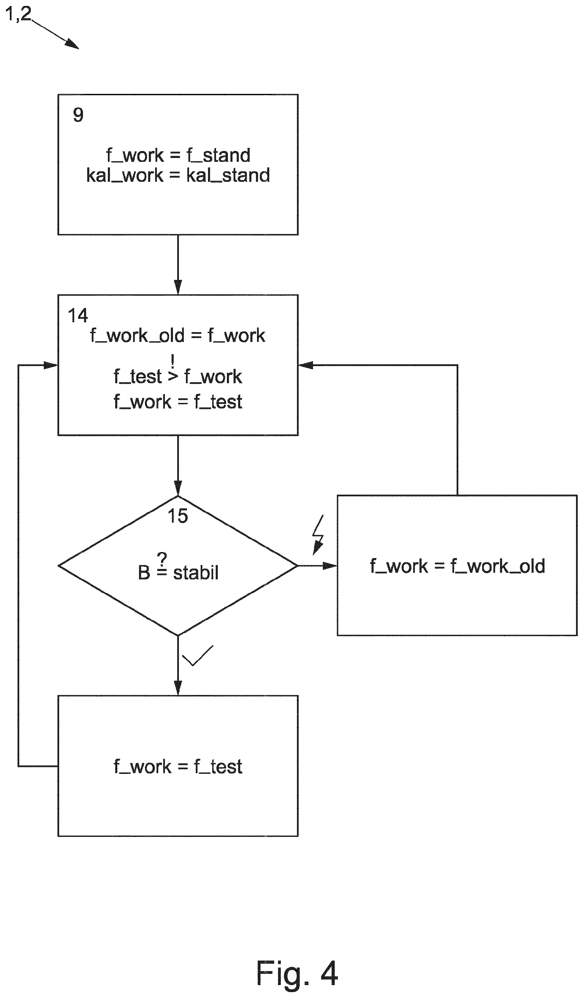

Bei dem Verfahren gemäß Fig. 4 wird die Testphase 14 mehrfach wiederholt, vorliegend so oft, bis die größte Test-Magnetfeldfrequenz f_test ermittelt worden ist, bei der in einem Intervall 10 einer konstanten Magnetfeldpolarität ein stabiles Magnetfeld B erzeugt wird, wobei diese Test-Magnetfeldfrequenz f_test dann natürlich als Arbeit-Magnetfeldfrequenz f_work eingestellt wird. Bei der Wiederholung der Testphase 14 wird die Test-Magnetfeldfrequenz f_test in gleichbleibenden Frequenzschritten erhöht. Wie in Fig. 3 ist in Fig. 4 der Bezeichner f_work_old eingeführt worden, um die alte Arbeit-Magnetfeldfrequenz verfügbar zu halten, um im Fall des erforderlichen Rückschritts wieder auf den Wert zurückgreifen zu können.

Das Verfahren 1 ist hier so ausgestaltet, dass die Testphase 14 nicht wiederholt wird, sobald eine maximale Test-Magnetfeldfrequenz f_test gefunden und als Arbeit-Magnetfeldfrequenz f_work eingestellt worden ist.

Ferner ist das Verfahren 1 so ausgestaltet, dass die Arbeit-Magnetfeldfrequenz f_work auf die Standard-Magnetfeldfrequenz f_stand zurückgeschaltet wird und die Testphase 14 ausgehend vom Standardbetrieb 9 neu durchlaufen wird, wobei das Zurückschalten auf den Standardbetrieb 9 in regelmäßigen Zeitabständen erfolgt. Dadurch wird sichergestellt, dass eine eingestellte Arbeit-Magnetfeldfrequenz f_work, mit der ein zuverlässiger Betrieb des Durchflusssensors 4 - aus welchem Grund auch immer - nicht mehr möglich ist, erkannt wird und eine sichere Rückfallposition, nämlich der Standardbetrieb 9, wieder eingestellt wird.

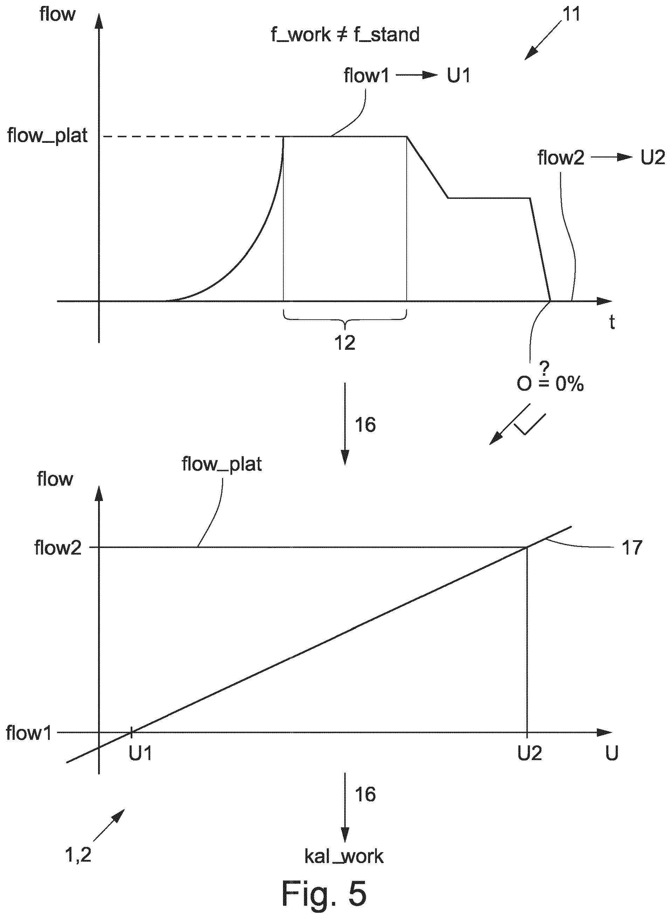

Das Verfahren 1 nach Fig 5 zeichnet sich dadurch aus, dass der Durchflusssensor 4 mit der von der Standard-Magnetfeldfrequenz f_stand abweichenden Arbeit-Magnetfeldfrequenz f_work betrieben wird und der Durchflusssensor 4 neu kalibriert 16 wird durch Ermittlung einer Test-Kalibrierkurve 17 zwischen zwei Punkten bekannten Durchflusses flow1, flow2 während des Abfüllvorgangs 11 und zugehörigen erfassten Spannungswerten U1, U2 an zwei Messelektroden 8 des Durchflusssensors 4, wobei die Test-Kalibrierkurve 17 als Arbeit-Kalibrierung kal_work verwendet wird. In anderen Ausführungsbeispielen wird eine Kalibrierung mit mehr als zwei Kalibrierpunkten durchgeführt.

Im vorliegenden Fall wird als ein Punkt bekannten Durchflusses flow1 der Plateau-Durchfluss flow_plat während der Plateauphase 12 des Durchflusses und der zugehörige Spannungswert U1 an den Messelektroden des Durchflusssensors 4 verwendet, und als ein zweiter Punkt wird ein Null-Durchfluss flow2 bei geschlossenem Abfüllventil 3 während des Abfüllvorgangs 11 und der zugehörige Spannungswert U2 an den Messelektroden 8 des Durchflusssensors 4 verwendet.

Zusätzlich ist realisiert, dass der Nulldurchfluss validiert wird durch Überprüfung des Öffnungsgrades O des Abfüllventils 3 auf vollständige Geschlossenheit.

Bei einer Ausgestaltung des Verfahrens 1 wird der Durchflusssensor 4 auf Standard-Betrieb 9 umgeschaltet, indem die Standard-Magnetfeldfrequenz f_stand als Arbeit-Magnetfeldfrequenz f_work und die Standard-Kalibrierung kal_stand als Arbeit-Kalibrierung kal_work eingestellt werden, wobei bei anschließender Durchführung eines Abfüllvorgangs 11 ein aktueller Plateau-Durchflussmesswert in der Plateauphase 12 des Durchflusses ermittelt wird, wobei bei einer Abweichung des aktuellen Plateau-Durchflussmesswertes von dem zuvor ermittelten oder gegebenen Plateau-Durchflussmesswert flow_plat mit Standard-Kalibrierung kal_stand oder von dem zuvor ermittelten Durchflussmesswert flow_plat in der Plateauphase 12 mit erhöhter Test-Magnetfeldfrequenz f_test mit der Test-Kalibrierkurve 17 als Arbeit-Kalibrierung kal_work eine neue Test-Kalibrierkurve 17 ermittelt und als Arbeit-Kalibrierung kal_work eingestellt wird. Mit dieser Verfahrensvariante wird gewährleistet, dass als valide angenommene Plateau-Durchflussmesswerte flow_plat, die aber nicht mehr zutreffend sind, als unzutreffend erkannt und korrigiert werden.

Bei einer Weiterentwicklung des Verfahrens 1 wird wenigstens eine Temperatur T des Durchflusssensors 4 ermittelt, insbesondere eine Temperatur T der Magnetfelderzeugungsvorrichtung 7 und/oder eine Mediumtemperatur des den Durchflusssensor 4 durchströmenden Mediumstroms und/oder eine Umgebungstemperatur des Durchflusssensors 4, wobei in Abhängigkeit von der wenigstens einen Temperatur T des Durchflusssensors 4 in der Testphase 14 eine Start-Test-Magnetfeldfrequenz f_test_start als Test-Magnetfeldfrequenz f_test ermittelt und verwendet wird, die nahe an der bei der ermittelten Temperatur T des Durchflusssensors 4 erreichbaren maximalen stabilen Test-Magnetfeldfrequenz f_test liegt, insbesondere wobei die Abhängigkeit der Start-Test-Magnetfeldfrequenz f_test_start von der wenigstens einen ermittelten Temperatur T des Durchflusssensors 4 empirisch ermittelt worden ist, insbesondere für einen bestimmten Typ von Durchflusssensor 4 oder einen bestimmten Typ von Abfüllvorrichtung 2.

Wenn das Verfahren 1 in einer Abfüllanlage mit vielen gleichartigen Abfüllvorrichtungen 2 verwendet wird, dann ist bei einer vorteilhaften Ausgestaltung vorgesehen, dass die für einen bestimmten Durchflusssensor 4 in einer bestimmten Abfüllvorrichtung 2 ermittelte Arbeit-Magnetfeldfrequenz f_work und/oder Test-Kalibrierkurve 17 als Arbeit-Kalibrierung kal_work auf andere Durchflusssensoren 4 in anderen Abfüllvorrichtungen 2 übertragen werden, insbesondere auf andere Durchflusssensoren 4 in anderen Abfüllvorrichtungen 2, die in einer Abfüllanlage zusammen mit der bestimmten Abfüllvorrichtung 2 betrieben werden.

Im Ergebnis führen das beschriebene Verfahren 1 und die entsprechend ausgestalteten Abfüllvorrichtungen 2 dazu, dass die Absolutgenauigkeit und die Wiederholbarkeit der Messung verbessert werden, sodass Abfüllvorgänge mit geringeren Sicherheitsaufschlägen und damit mit geringerem Rohstoffbedarf durchgeführt werden können.

### Bezugszeichen

- 1: Verfahren
- 2: Abfüllvorrichtung
- 3: Abfüllventil
- 4: magnetisch-induktiver Durchflusssensor
- 5: Steuer- und Auswerteeinheit
- 6: Messrohr
- 7: Magnetfelderzeugungsvorrichtung
- 8: Messelektroden
- 9: Standardbetrieb
- 10: Intervall konstanter Magnetfeldpolarität
- 10': Umschaltintervall der Magnetfeldpolarität
- 11: Abfüllvorgang
- 12: Plateauphase des Durchflusses
- 13: Füllkurve
- 14: Testphase
- 15: Überprüfung auf stabiles Magnetfeld
- 16: Neukalibrierung des Durchflusssensors
- 17: Test-Kalibrierkurve

- B: Magnetfeld
- U: elektrische Spannung an den Messelektroden
- f_stand: Standard-Magnetfeldfrequenz
- f_work: Arbeit-Magnetfeldfrequenz
- f_test: Test-Magnetfeldfrequenz
- kal_stand: Standard-Kalibrierung
- kal_work: Arbeit-Kalibrierung
- flow: Durchflussmesswert
- flow_plat: Plateau-Durchflussmesswert
- O: Öffnungsgrad des Abfüllventils
- stab: stabiles Magnetfeld
- flow1, flow2: Durchflussmesswerte zum Neukalibrieren
- U1, U2: Messelektrodenspannungen bei flow1, flow2

## Patentansprüche

1. Verfahren (1) zum Betreiben einer Abfüllvorrichtung (2) mit einem Abfüllventil (3) zur Steuerung eines Mediumstroms, mit einem magnetisch-induktiven Durchflusssensor (4) zur messtechnischen Erfassung des von dem Abfüllventil (3) freigegebenen Mediumstroms und mit einer Steuer- und Auswerteeinheit (5) zur Ansteuerung des Abfüllventils (3), wobei der magnetisch-induktive Durchflusssensor (4) ein Messrohr (6) zum Führen des Mediumstroms, eine Magnetfelderzeugungsvorrichtung (7) zum Erzeugen eines das Messrohr (6) senkrecht zur Strömungsrichtung des Mediumstroms durchsetzenden Magnetfeldes (B) aufweist, wobei die Steuer- und Auswerteeinheit (5) die Magnetfelderzeugungsvorrichtung (7) so ansteuert, dass in einem Standardbetrieb (9) das Magnetfeld (B) mit einer Standard-Magnetfeldfrequenz (f_stand) als Arbeit-Magnetfeldfrequenz (f_work) seine Polarität ändert, wobei die Steuer- und Auswerteeinheit (5) im Intervall (10) einer konstanten Magnetfeldpolarität und eines stabilen Magnetfeldes (8) auf Grundlage einer Standard-Kalibrierung (kal_stand) als Arbeit-Kalibrierung (kal_work) mindestens einen Durchflussmesswert (flow) ermittelt, und wobei die Steuer- und Auswerteeinheit (5) das Abfüllventil (3) zur Durchführung eines Abfüllvorgangs (11) mit wenigstens einer Plateauphase (12) des Durchflusses und einem zugehörigen Plateau-Durchflussmesswert (flow_plat) mit einer definierten Soll-Abfüllmenge gemäß einer Füllkurve (13) ansteuert, wobei die Füllkurve (13) den Öffnungsgrad (O) des Abfüllventils (3) angibt,
**dadurch gekennzeichnet,**
**dass** in einer Testphase (14) die Steuer- und Auswerteeinheit (5) die Magnetfelderzeugungsvorrichtung (7) mit einer Test-Magnetfeldfrequenz (f_test) betreibt, die größer ist als die eingestellte Arbeit-Magnetfeldfrequenz (f_work), wobei überprüft (15) wird, ob auch bei der Test-Magnetfeldfrequenz (f_test) in einem Intervall (10) einer konstanten Magnetfeldpolarität ein stabiles Magnetfeld (B) erzeugt wird und
**dass** bei Erzeugen eines stabilen Magnetfeldes (B) die Test-Magnetfeldfrequenz (f_test) als neue Arbeit-Magnetfeldfrequenz (f_work) eingestellt und verwendet wird.

2. Verfahren (1) nach Anspruch 1, **dadurch gekennzeichnet, dass** die Überprüfung (15), ob in einem Intervall (10) einer konstanten Magnetfeldpolarität ein stabiles Magnetfeld (B) erzeugt wird, dadurch erfolgt, dass ein Magnetfeldsensor ausgewertet wird und die Stationarität des Magnetfeldes (B) beurteilt wird, und/oder dass die Stationarität eines in die Magnetfelderzeugungsvorrichtung (7) eingeprägten Stroms und/oder einer an die Magnetfelderzeugungsvorrichtung (7) angelegten Spannung beurteilt wird, insbesondere durch Zeitreihenanalyse der erfassten Magnetfeldstärke und/oder des erfassten eingeprägten Stromes und/oder der erfassten angelegten Spannung.

3. Verfahren (1) nach Anspruch 1 oder 2, **dadurch gekennzeichnet, dass** die Testphase (14) mehrfach wiederholt wird, insbesondere bis die größte Test-Magnetfeldfrequenz (f_test) ermittelt worden ist, bei der in einem Intervall (10) einer konstanten Magnetfeldpolarität ein stabiles Magnetfeld (B) erzeugt wird, wobei diese Test-Magnetfeldfrequenz (f_test) als Arbeit-Magnetfeldfrequenz (f_work) eingestellt wird.

4. Verfahren (1) nach Anspruch 3, **dadurch gekennzeichnet, dass** die Test-Magnetfeldfrequenz (f_test) in gleichbleibenden Frequenzschritten erhöht wird oder dass die Test-Magnetfeldfrequenz (f_test) zunächst in großen, dann in kleiner werdenden Frequenzschritten erhöht wird, oder dass die Test-Magnetfeldfrequenz (f_test) nach dem Prinzip der Intervallschachtelung verändert wird.

5. Verfahren (1) nach einem der Ansprüche 1 bis 4, **dadurch gekennzeichnet, dass** die Arbeit-Magnetfeldfrequenz (f_work) auf die Standard-Magnetfeldfrequenz (f_stand) zurückgeschaltet wird und die Testphase (14) ausgehend vom Standardbetrieb (9) neu durchlaufen wird, insbesondere wobei das Zurückschalten auf den Standardbetrieb (9) in regelmäßigen Zeitabständen oder Abfüllintervallen erfolgt.

6. Verfahren (1) nach einem der Ansprüche 1 bis 5, **dadurch gekennzeichnet, dass** der Durchflusssensor (4) mit der von der Standard-Magnetfeldfrequenz (f_stand) abweichenden Arbeit-Magnetfeldfrequenz (f_work) betrieben wird und der Durchflusssensor (4) neu kalibriert (16) wird durch Ermittlung einer Test-Kalibrierkurve (17) zwischen wenigstens zwei Punkten bekannten Durchflusses (flow1, flow2) während des Abfüllvorgangs (11) und zugehörigen erfassten Spannungswerten (U1, U2) an zwei Messelektroden (8) des Durchflusssensors (4), wobei die Test-Kalibrierkurve (17) als Arbeit-Kalibrierung (kal_work) verwendet wird.

7. Verfahren (1) nach Anspruch 6, **dadurch gekennzeichnet, dass** als ein Punkt bekannten Durchflusses (flow1) der Plateau-Durchfluss (flow_plat) während der Plateauphase (12) des Durchflusses und der zugehörige Spannungswert (U1) an den Messelektroden des Durchflusssensors (4) verwendet wird und/oder dass als ein anderer Punkt ein Null-Durchfluss (flow2 )bei geschlossenem Abfüllventil (3) während des Abfüllvorgangs (11) und der zugehörige Spannungswert (U2) an den Messelektroden (8) des Durchflusssensors (4) verwendet wird.

8. Verfahren (1) nach Anspruch 7, **dadurch gekennzeichnet, dass** der Nulldurchfluss validiert wird durch Überprüfung des Öffnungsgrades (O) des Abfüllventils (3) auf vollständige Geschlossenheit und/oder durch Überprüfung des Null-Durchflusses durch den Durchflussmesswert (flow) des Durchflusssensors (4) bei übergangsweisem Zurückschalten auf den Standardbetrieb (9) mit der Standard-Magnetfeldfrequenz (f_stand) und nachfolgendem Wechsel auf die von der Standard-Magnetfeldfrequenz (f_stand) abweichende stabile Test-Magnetfeldfrequenz (f_test), für die die Kalibrierkurve bestimmt wird.

9. Verfahren (1) nach einem der Ansprüche 6 bis 8, **dadurch gekennzeichnet, dass** der Durchflusssensor (4) auf Standard-Betrieb (9) umgeschaltet wird, indem die Standard-Magnetfeldfrequenz (f_stand) als Arbeit-Magnetfeldfrequenz (f_work) und die Standard-Kalibrierung (kal_stand) als Arbeit-Kalibrierung (kal_work) eingestellt wird, dass bei bei anschließender Durchführung eines Abfüllvorgangs (11) ein aktueller Plateau-Durchflussmesswert in der Plateauphase (12) des Durchflusses ermittelt wird, wobei bei einer Abweichung des aktuellen Plateau-Durchflussmesswertes von dem zuvor ermittelten oder gegebenen Plateau-Durchflussmesswert (flow_plat) mit Standard-Kalibrierung (kal_stand) oder von dem zuvor ermittelten Durchflussmesswert (flow_plat) in der Plateauphase (12) mit erhöhter Test-Magnetfeldfrequenz (f_test) mit der Test-Kalibrierkurve (17) als Arbeit-Kalibrierung (kal_work) eine neue Test-Kalibrierkurve (17) ermittelt und als Arbeit-Kalibrierung (kal_work) eingestellt wird.

10. Verfahren (1) nach einem der Ansprüche 1 bis 9, **dadurch gekennzeichnet, dass** wenigstens eine Temperatur (T) des Durchflusssensors (4) ermittelt wird, insbesondere eine Temperatur (T) der Magnetfelderzeugungsvorrichtung (7) und/oder eine Mediumtemperatur des den Durchflusssensor (4) durchströmenden Mediumstroms und/oder eine Umgebungstemperatur des Durchflusssensors (4), dass in Abhängigkeit von der wenigstens einen Temperatur (T) des Durchflusssensors (4) in der Testphase (14) eine Start-Test-Magnetfeldfrequenz als Test-Magnetfeldfrequenz (f_test) ermittelt und verwendet wird, die nahe an der bei der ermittelten Temperatur (T) des Durchflusssensors (4) erreichbaren maximalen stabilen Test-Magnetfeldfrequenz (f_test) liegt, insbesondere wobei die Abhängigkeit der Start-Test-Magnetfeldfrequenz von der wenigstens einen ermittelten Temperatur (T) des Durchflusssensors (4) empirisch ermittelt worden ist, insbesondere für einen bestimmten Typ von Durchflusssensor (4) oder Abfüllvorrichtung (2).

11. Verfahren (1) nach einem der Ansprüche 1 bis 10, **dadurch gekennzeichnet, dass** die für einen bestimmten Durchflusssensor (4) in einer bestimmten Abfüllvorrichtung (2) ermittelte Arbeit-Magnetfeldfrequenz (f_work) und/oder Test-Kalibrierkurve (17) als Arbeit-Kalibrierung (kal_work) auf andere Durchflusssensoren (4) in anderen Abfüllvorrichtungen (2) übertragen werden, insbesondere auf andere Durchflusssensoren (4) in anderen Abfüllvorrichtungen (2), die in einer Abfüllanlage zusammen mit der bestimmten Abfüllvorrichtung (2) betrieben werden.

12. Abfüllvorrichtung (2) mit einem Abfüllventil (3) zur Steuerung eines Mediumstroms, mit einem magnetisch-induktiven Durchflusssensor (4) zur messtechnischen Erfassung des von dem Abfüllventil (3) freigegebenen Mediumstroms und mit einer Steuer- und Auswerteeinheit (5) zur Ansteuerung des Abfüllventils (3), wobei der magnetisch-induktive Durchflusssensor (4) ein Messrohr (6) zum Führen des Mediumstroms, eine Magnetfelderzeugungsvorrichtung (7) zum Erzeugen eines das Messrohr (6) senkrecht zur Strömungsrichtung des Mediumstroms durchsetzenden Magnetfeldes (B) aufweist, wobei die Steuer- und Auswerteeinheit (5) die Magnetfelderzeugungsvorrichtung (7) so ansteuert, dass in einem Standardbetrieb (9) das Magnetfeld (B) mit einer Standard-Magnetfeldfrequenz (f_stand) als Arbeit-Magnetfeldfrequenz (f_work) seine Polarität ändert, wobei die Steuer- und Auswerteeinheit (5) im Intervall (10) einer konstanten Magnetfeldpolarität und eines stabilen Magnetfeldes (8) auf Grundlage einer Standard-Kalibrierung (kal_stand) als Arbeit-Kalibrierung (kal_work) mindestens einen Durchflussmesswert (flow) ermittelt, und wobei die Steuer- und Auswerteeinheit (5) das Abfüllventil (3) zur Durchführung eines Abfüllvorgangs (11) mit wenigstens einer Plateauphase (12) des Durchflusses und einem zugehörigen Plateau-Durchflussmesswert (flow_plat) mit einer definierten Soll-Abfüllmenge gemäß einer Füllkurve (13) ansteuert, wobei die Füllkurve (13) den Öffnungsgrad (O) des Abfüllventils (3) angibt,
**dadurch gekennzeichnet,**
**dass** die Steuer- und Auswerteeinheit so ausgestaltet und eingerichtet ist, dass sie beim Betrieb der Abfüllvorrichtung das Verfahren gemäß einem der Ansprüche 1 bis 11 durchführt.

## Claims

1. Method (1) for operating a filling device (2) comprising a filling valve (3) for controlling a flow of medium, a magnetic-inductive flow sensor (4) for measurement-based capture of the flow of medium discharged by the filling valve (3), and a control and evaluation unit (5) for controlling the filling valve (3), wherein the magnetic-inductive flow sensor (4) comprises a measuring tube (6) for guiding the flow of the medium, and a magnetic field generator (7) for generating a magnetic field (B) that penetrates the measuring tube (6) perpendicular to the direction of flow of the medium, wherein the control and evaluation unit (5) controls the magnetic field generator (7) such that, in standard mode (9), the magnetic field (B) changes its polarity at a standard magnetic field frequency (f_stand) as the working magnetic field frequency (f_work), wherein the control and evaluation unit (5) determines at least one flow measurement value (flow) during the interval (10) of constant magnetic field polarity and a stable magnetic field (8) based on a standard calibration (kal_stand) as a working calibration (kal_work), and wherein the control and evaluation unit (5) determines the flow measurement value for at least one plateau phase (12) of the flow and a corresponding plateau flow measurement value (flow_plat) with a defined target filling quantity according to a filling curve (13), wherein the filling curve (13) specifies the opening degree (O) of the filling valve (3),
**characterized in**
**that** during a test phase (14), the control and evaluation unit (5) operates the magnetic field generator (7) at a test magnetic field frequency (f_test) that is greater than the set operating magnetic field frequency (f_work), wherein it is checked (15) whether a stable magnetic field (B) is generated even at the test magnetic field frequency (f_test) within an interval (10) of constant magnetic field polarity, and
**that** if a stable magnetic field (B) is generated, the test magnetic field frequency (f_test) is set and used as the new operating magnetic field frequency (f_work).

2. Method (1) according to claim 1, **characterized in that** the check (15) as to whether a stable magnetic field (B) is generated within an interval (10) of constant magnetic field polarity is performed by evaluating a magnetic field sensor and assessing the stationarity of the magnetic field (B),
and/or that the stationarity of a current impressed into the magnetic field generator (7) and/or a voltage applied to the magnetic field generator (7) is assessed, in particular by time series analysis of the captured magnetic field strength and/or the captured impressed current and/or the captured applied voltage.

3. Method (1) according to claim 1 or 2, **characterized in that** the test phase (14) is repeated multiple times, in particular until the highest test magnetic field frequency (f_test) has been determined at which a stable magnetic field (B) is generated within an interval (10) of constant magnetic field polarity, wherein this test magnetic field frequency (f_test) is set as the working magnetic field frequency (f_work).

4. Method (1) according to claim 3, **characterized in that** the test magnetic field frequency (f_test) is increased in constant frequency steps, or that the test magnetic field frequency (f_test) is initially increased in large frequency steps and then in progressively smaller frequency steps, or that the test magnetic field frequency (f_test) is varied according to the principle of interval nesting.

5. Method (1) according to any one of claims 1 to 4, **characterized in that** the operating magnetic field frequency (f_work) is switched back to the standard magnetic field frequency (f_stand) and the test phase (14) is run through again starting from standard mode (9), in particular where the switching back to standard mode (9) takes place at regular time intervals or filling intervals.

6. Method (1) according to any one of claims 1 to 5, **characterized in that** the flow sensor (4) is operated at the operating magnetic field frequency (f_work), which differs from the standard magnetic field frequency (f_stand), and the flow sensor (4) is recalibrated (16) by determining a test calibration curve (17) between at least two points of known flow (flow1, flow2) during the filling process (11) and corresponding captured voltage values (U1, U2) at two measuring electrodes (8) of the flow sensor (4), wherein the test calibration curve (17) is used as a working calibration (kal_work).

7. Method (1) according to claim 6, **characterized in that** the plateau flow rate (flow_plat) during the plateau phase (12) of the flow and the corresponding voltage value (U1) at the measuring electrodes of the flow sensor (4) are used, and/or that as another point, a zero flow (flow2) with the filling valve (3) closed during the filling process (11) and the corresponding voltage value (U2) at the measuring electrodes (8) of the flow sensor (4) are used.

8. Method (1) according to claim 7, **characterized in that** the zero flow is validated by checking the opening degree (O) of the filling valve (3) for complete closure and/or by checking the zero flow via the flow measurement value (flow) of the flow sensor (4) during a temporary switchback to standard mode (9) with the standard magnetic field frequency (f_stand) and a subsequent switch to the stable test magnetic field frequency (f_test), which differs from the standard magnetic field frequency (f_stand) and for which the calibration curve is determined.

9. Method (1) according to any one of claims 6 to 8, **characterized in that** the flow sensor (4) is switched to standard mode (9) by setting the standard magnetic field frequency (f_stand) as the working magnetic field frequency (f_work) and the standard calibration (kal_stand) as the working calibration (kal_work), that during the subsequent performance of a filling process (11), a current plateau flow measurement value is determined in the plateau phase (12) of the flow, wherein in the event of a deviation of the current plateau flow measurement value from the previously determined or given plateau flow measurement value (flow_plat) with standard calibration (kal_stand) or from the previously determined flow measurement value (flow_plat) in the plateau phase (12) at an increased test magnetic field frequency (f_test), a new test calibration curve (17) is determined using the test calibration curve (17) as the working calibration (kal_work) and is set as the working calibration (kal_work).

10. Method (1) according to any one of claims 1 to 9, **characterized in that** at least one temperature (T) of the flow sensor (4) is determined, in particular a temperature (T) of the magnetic field generator (7) and/or a medium temperature of the medium flow passing through the flow sensor (4) and/or an ambient temperature of the flow sensor (4), that, depending on the at least one temperature (T) of the flow sensor (4), a start test magnetic field frequency is determined and used as the test magnetic field frequency (f_test) during the test phase (14), which is close to the maximum stable test magnetic field frequency (f_test) achievable at the determined temperature (T) of the flow sensor (4), in particular wherein the dependence of the start test magnetic field frequency on the at least one determined temperature (T) of the flow sensor (4) has been empirically determined, in particular for a specific type of flow sensor (4) or filling device (2).

11. Method (1) according to any one of claims 1 to 10, **characterized in that** the working magnetic field frequency (f_work) determined for a specific flow sensor (4) in a specific filling device (2) and/or test calibration curve (17) determined for a specific flow sensor (4) in a specific filling device (2) is transferred as a working calibration (kal_work) to other flow sensors (4) in other filling devices (2), in particular to other flow sensors (4) in other filling devices (2) that are operated in a filling system together with the specific filling device (2).

12. Filling device (2) comprising a filling valve (3) for controlling a flow of a medium, a magnetic-inductive flow sensor (4) for measurement-based capture of the flow of the medium discharged by the filling valve (3), and a control and evaluation unit (5) for controlling the filling valve (3), wherein the magnetic-inductive flow sensor (4) comprises a measuring tube (6) for guiding flow of the medium, a magnetic field generator (7) for generating a magnetic field (B) that penetrates the measuring tube (6) perpendicular to the direction of flow of the medium, wherein the control and evaluation unit (5) controls the magnetic field generator (7) such that, in standard mode (9), the magnetic field (B) changes its polarity at a standard magnetic field frequency (f_stand) as the working magnetic field frequency (f_work), wherein the control and evaluation unit (5) determines at least one flow measurement value (flow) during the interval (10) of constant magnetic field polarity and a stable magnetic field (8) based on a standard calibration (kal_stand) as a working calibration (kal_work), and wherein the control and evaluation unit (5) controls the filling valve (3) to perform a filling operation (11) with at least one plateau phase (12) of the flow and a corresponding plateau flow measurement value (flow_plat) with a defined target filling quantity according to a filling curve (13), wherein the filling curve (13) specifies the opening degree (O) of the filling valve (3),
**characterized in**
**that** the control and evaluation unit is configured and arranged such that, during operation of the filling device, it performs the method according to any one of claims 1 to 11.

## Revendications

1. Procédé (1) pour faire fonctionner un dispositif de remplissage (2) comprenant une vanne de remplissage (3) destinée à la commande d'un courant de fluide, comprenant un capteur de débit magnéto-inductif (4) destiné à la détection métrologique du courant de fluide libéré par la vanne de remplissage (3) et comprenant une unité de commande et d'évaluation (5) destinée à commander la vanne de remplissage (3), le capteur de débit magnéto-inductif (4) possédant un tube de mesure (6) destiné à guider le courant de fluide, un dispositif de génération de champ magnétique (7) destiné à générer un champ magnétique (B) qui traverse le tube de mesure (6) perpendiculairement au sens d'écoulement du courant de fluide, l'unité de commande et d'évaluation (5) commandant le dispositif de génération de champ magnétique (7) de telle sorte que dans un fonctionnement standard (9), le champ magnétique (B) change sa polarité avec une fréquence de champ magnétique standard (f_stand) comme fréquence de champ magnétique de travail (f_work), l'unité de commande et d'évaluation (5) déterminant au moins une valeur de mesure de débit (flow) dans l'intervalle (10) d'une polarité de champ magnétique constante et d'un champ magnétique stable (8) sur la base d'un étalonnage standard (kal_stand) comme étalonnage de travail (kal_work), et l'unité de commande et d'évaluation (5) commandant la vanne de remplissage (3) pour effectuer une opération de remplissage (11) avec au moins une phase de plateau (12) du débit et une valeur de mesure de débit de plateau (flow_plat) associée avec une quantité de remplissage de consigne définie selon une courbe de remplissage (13), la courbe de remplissage (13) indiquant le degré d'ouverture (O) de la vanne de remplissage (3),
**caractérisé en ce**
**que** dans une phase de test (14), l'unité de commande et d'évaluation (5) fait fonctionner le dispositif de génération de champ magnétique (7) avec une fréquence de champ magnétique de test (f_test), qui est supérieure à la fréquence de champ magnétique de travail (f_work) réglée, un contrôle (15) étant effectué afin de vérifier si un champ magnétique (B) stable est également généré à la fréquence de champ magnétique de test (f_test) dans un intervalle (10) d'une polarité de champ magnétique constante et
**que** lors de la génération d'un champ magnétique stable (B), la fréquence de champ magnétique de test (f_test) est réglée et utilisée comme nouvelle fréquence de champ magnétique de travail (f_work).

2. Procédé (1) selon la revendication 1, **caractérisé en ce que** le contrôle (15) visant à vérifier si un champ magnétique (B) stable est généré dans un intervalle (10) d'une polarité de champ magnétique constante est effectué **en ce qu'**un capteur de champ magnétique est évalué et la stationnarité du champ magnétique (B) est évaluée, et/ou **en ce que** la stationnarité d'un courant injecté dans le dispositif de génération de champ magnétique (7) et/ou d'une tension appliquée au dispositif de génération de champ magnétique (7) est évaluée, en particulier par analyse de séries temporelles de l'intensité de champ magnétique détectée et/ou du courant injecté détecté et/ou de la tension appliquée détectée.

3. Procédé (1) selon la revendication 1 ou 2, **caractérisé en ce que** la phase de test (14) est répétée plusieurs fois, en particulier jusqu'à avoir déterminé la fréquence de champ magnétique de test (f_test) la plus élevée à laquelle un champ magnétique (B) stable est généré dans un intervalle (10) d'une polarité de champ magnétique constante, cette fréquence de champ magnétique de test (f_test) étant réglée comme fréquence de champ magnétique de travail (f_work).

4. Procédé (1) selon la revendication 3, **caractérisé en ce que** la fréquence de champ magnétique de test (f_test) est augmentée par paliers de fréquence constants ou **en ce que** la fréquence de champ magnétique de test (f_test) est augmentée tout d'abord par des paliers de fréquence importants, puis de plus en plus petits, ou **en ce que** la fréquence du champ magnétique de test (f_test) est modifiée selon le principe de l'imbrication d'intervalles.

5. Procédé (1) selon l'une des revendications 1 à 4, **caractérisé en ce que** la fréquence de champ magnétique de travail (f_work) est ramenée à la fréquence de champ magnétique standard (f_stand) et la phase de test (14) est répétée à partir du fonctionnement standard (9), le retour au fonctionnement standard (9) s'effectuant notamment à intervalles de temps ou intervalles de remplissage réguliers.

6. Procédé (1) selon l'une des revendications 1 à 5, **caractérisé en ce que** le capteur de débit (4) est amené à fonctionner avec une fréquence de champ magnétique de travail (f_work) qui s'écarte de la fréquence de champ magnétique standard (f_stand) et le capteur de débit (4) est réétalonné (16) par détermination d'une courbe d'étalonnage de test (17) entre au moins deux points de débit connu (flow1, flow2) pendant l'opération de remplissage (11) et des valeurs de tension (U1, U2) détectées associées au niveau de deux électrodes de mesure (8) du capteur de débit (4), la courbe d'étalonnage de test (17) étant utilisée comme étalonnage de travail (kal_work).

7. Procédé (1) selon la revendication 6, **caractérisé en ce que** le débit de plateau (flow_plat) pendant la phase de plateau (12) du débit et la valeur de tension (U1) associée au niveau des électrodes de mesure du capteur de débit (4) sont utilisés comme un point de débit connu (flow1) et/ou **en ce qu'**un débit nul (flow2) lorsque la vanne de remplissage (3) est fermée pendant l'opération de remplissage (11) et la valeur de tension (U2) associée au niveau des électrodes de mesure (8) du capteur de débit (4) sont utilisés comme un autre point.

8. Procédé (1) selon la revendication 7, **caractérisé en ce que** le débit nul est validé par contrôle du degré d'ouverture (O) de la vanne de remplissage (3) afin de vérifier la fermeture complète et/ou par contrôle du débit nul par la valeur de mesure de débit (flow) du capteur de débit (4) lors d'un retour transitoire au fonctionnement standard (9) avec la fréquence de champ magnétique standard (f_stand) et ensuite d'un changement à la fréquence de champ magnétique de test (f_test) stable pour laquelle la courbe d'étalonnage est déterminée et qui s'écarte de la fréquence de champ magnétique standard (f_stand).

9. Procédé (1) selon l'une des revendications 6 à 8, **caractérisé en ce que** le capteur de débit (4) est permuté en fonctionnement standard (9) en réglant la fréquence de champ magnétique standard (f_stand) comme fréquence de champ magnétique de travail (f_work) et l'étalonnage standard (kal_stand) comme étalonnage de travail (kal_work), **en ce que** lorsqu'une opération de remplissage (11) est ensuite effectuée, une valeur de mesure de débit de plateau actuelle est déterminée dans la phase de plateau (12) du débit, une nouvelle courbe d'étalonnage de test (17) étant déterminée et réglée comme étalonnage de travail (kal_work) dans le cas d'un écart de la valeur de mesure de débit de plateau actuelle par rapport à la valeur de mesure de débit de plateau (flow_plat) déterminée ou donnée précédemment avec l'étalonnage standard (kal_stand) ou par rapport à la valeur de mesure de débit (flow_plat) déterminée précédemment dans la phase de plateau (12) avec une fréquence de champ magnétique de test (f_test) augmentée avec la courbe d'étalonnage de test (17) comme étalonnage de travail (kal_work).

10. Procédé (1) selon l'une des revendications 1 à 9, **caractérisé en ce qu'**au moins une température (T) du capteur de débit (4) est déterminée, en particulier une température (T) du dispositif de génération de champ magnétique (7) et/ou une température de fluide du courant de fluide dont l'écoulement traverse le capteur de débit (4) et/ou une température ambiante du capteur de débit (4), **en ce qu'**en fonction de l'au moins une température (T) du capteur de débit (4), une fréquence de champ magnétique de test de démarrage est déterminée et utilisée comme fréquence de champ magnétique de test (f_test) dans la phase de test (14), laquelle est proche de la fréquence de champ magnétique de test (f_test) stable maximale qui peut être atteinte à la température (T) déterminée du capteur de débit (4), la dépendance de la fréquence de champ magnétique de test de démarrage à l'au moins une température (T) déterminée du capteur de débit (4) ayant notamment été déterminée de manière empirique, en particulier pour un type spécifié de capteur de débit (4) ou de dispositif de remplissage (2).

11. Procédé (1) selon l'une des revendications 1 à 10, **caractérisé en ce que** la fréquence de champ magnétique de travail (f_work) et/ou la courbe d'étalonnage de test (17) déterminées pour un capteur de débit (4) spécifié dans un dispositif de remplissage (2) spécifié sont transmises comme étalonnage de travail (kal_work) à d'autres capteurs de débit (4) dans d'autres dispositifs de remplissage (2), en particulier à d'autres capteurs de débit (4) dans d'autres dispositifs de remplissage (2) qui fonctionnent dans une installation de remplissage conjointement avec le dispositif de remplissage (2) spécifié.

12. Dispositif de remplissage (2) comprenant une vanne de remplissage (3) destinée à la commande d'un courant de fluide, comprenant un capteur de débit magnéto-inductif (4) destiné à la détection métrologique du courant de fluide libéré par la vanne de remplissage (3) et comprenant une unité de commande et d'évaluation (5) destinée à commander la vanne de remplissage (3), le capteur de débit magnéto-inductif (4) possédant un tube de mesure (6) destiné à guider le courant de fluide, un dispositif de génération de champ magnétique (7) destiné à générer un champ magnétique (B) qui traverse le tube de mesure (6) perpendiculairement au sens d'écoulement du courant de fluide, l'unité de commande et d'évaluation (5) commandant le dispositif de génération de champ magnétique (7) de telle sorte que dans un fonctionnement standard (9), le champ magnétique (B) change sa polarité avec une fréquence de champ magnétique standard (f_stand) comme fréquence de champ magnétique de travail (f_work), l'unité de commande et d'évaluation (5) déterminant au moins une valeur de mesure de débit (flow) dans l'intervalle (10) d'une polarité de champ magnétique constante et d'un champ magnétique stable (8) sur la base d'un étalonnage standard (kal_stand) comme étalonnage de travail (kal_work), et l'unité de commande et d'évaluation (5) commandant la vanne de remplissage (3) pour effectuer une opération de remplissage (11) avec au moins une phase de plateau (12) du débit et une valeur de mesure de débit de plateau (flow_plat) associée avec une quantité de remplissage de consigne définie selon une courbe de remplissage (13), la courbe de remplissage (13) indiquant le degré d'ouverture (O) de la vanne de remplissage (3)
**caractérisé en ce**
**que** l'unité de commande et d'évaluation est configurée et conçue de telle sorte que, lors du fonctionnement du dispositif de remplissage, elle met en œuvre le procédé selon l'une des revendications 1 à 11.
